(19) Europäisches Patentamt
European Patent Office
Office européen des brevets

(11) **EP 3 510 427 B1**

(12) **EUROPÄISCHE PATENTSCHRIFT**

(45) Veröffentlichungstag und Bekanntmachung des Hinweises auf die Patenterteilung:
**08.01.2020 Patentblatt 2020/02**

(51) Int Cl.:
***G01V 11/00*** *(2006.01)*

(21) Anmeldenummer: **16763289.2**

(22) Anmeldetag: **12.09.2016**

(86) Internationale Anmeldenummer:
**PCT/EP2016/071455**

(87) Internationale Veröffentlichungsnummer:
**WO 2018/046110 (15.03.2018 Gazette 2018/11)**

(54) **VERFAHREN ZUR ERKUNDUNG VON ROHSTOFFLAGERSTÄTTEN**

METHOD FOR EXPLORING RAW MATERIAL DEPOSITS

PROCÉDÉ DE PROSPECTION DE GISEMENTS DE MATIÈRES PREMIÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.07.2019 Patentblatt 2019/29**

(73) Patentinhaber:
• **Lempke, Roman**
  **12107 Berlin (DE)**
• **Dreiucker, Wolfgang**
  **15366 Hönow (DE)**
• **Magdeburg, Frank**
  **15366 Hönow (DE)**

(72) Erfinder:
• **Lempke, Roman**
  **12107 Berlin (DE)**
• **Dreiucker, Wolfgang**
  **15366 Hönow (DE)**
• **Magdeburg, Frank**
  **15366 Hönow (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**WO-A2-2011/000755     DE-A1-102009 032 098**

• **MAURER H ET AL: "Design strategies for electromagnetic geophysical surveys", INVERSE PROBLEMS, INSTITUTE OF PHYSICS PUBLISHING, BRISTOL, GB, Bd. 16, Nr. 5, 1. Oktober 2000 (2000-10-01), Seiten 1097-1117, XP008125204, ISSN: 0266-5611**
• **T Guest ET AL: "Iteratively constructive sequential design of experiments and surveys with nonlinear parameter-data relationships", JOURNAL OF GEOPHYSICAL RESEARCH, 28. April 2009 (2009-04-28), Seiten B04307-1, XP055003841, DOI: 10.1029/2008JB005948 Gefunden im Internet: URL:http://www.eeo.ed.ac.uk/homes/acurtis/ Guest_Curtis_JGR_2009.pdf [gefunden am 2011-07-28]**

EP 3 510 427 B1

**Beschreibung**

Die Erfindung betrifft ein Verfahren zur Erkundung von Rohstofflagerstätten und ist insbesondere einsetzbar für eine objektive, reproduzierbare Berechnung einer Erkundungsdichte für die technischen Erkundungsmethoden in einer lagerstättenkundlich sicheren geologischen Erkundung von sedimentären, insbesondere von allochtonen, residualen und sekundären Rohstofflagerstätten.

Ein Verfahren zur geologischen Erkundung von Rohstofflagerstätten ist bereits aus der Veröffentlichung DE 10 2010 030 453 A1 bekannt. Gemäß dieser Lösung wird die Erkundungsdichte für den Einsatz der Erkundungsmethoden mit Hilfe der Erkundungsintensität der Erkundungsmethoden und einer vorgebbaren Wahrscheinlichkeit für die Aussagesicherheit für die Erkundungsergebnisse berechnet. Die Erkundungsintensität ist dabei als Verhältnis zwischen der technischen Reichweite der Erkundungsmethoden, dem Stichprobenumfang, dem Korrelationskoeffizienten für die Stärke des Zusammenhangs der signifikanten Merkmale der Lagerstätte und dem Raumvolumen des Gesteinskörpers unter der Erkundungsfläche definiert.

Die WO 2011/000755 A2 beschreibt ein Verfahren zur Bestimmung einer stochastischen Erkundungsdichte für die technischen Erkundungsmaßnahmen in einer lagerstättenkundlich sicheren und wirtschaftlich effizienten geologischen Erkundung von sedimentären, insbesondere von allochtonen, residualen und sekundären Rohstofflagerstätten, welches die Erkundungsdichte über einen gewünschten Grad der Wahrscheinlichkeit für die Genauigkeit der Abbildung der objektiven Lagerstättenverhältnisse und über einen variablen Wirkungsgrad der Erkundungsmethoden in zufallsabhängigen Erkundungssituationen determiniert. Hierfür wird vorgeschlagen, die Erkundung unter Verwendung eines technischen und aufwandsbezogenen Erkundungspotentials durchzuführen, wobei das Erkundungspotential direkte und indirekte Erkundungsmethoden, zumindest geophysikalische Messverfahren, Erkundungsaufschlüsse und Analytik umfasst. Für eine erste Stufe der Erkundung werden erste Abstände für den Einsatz der Erkundungstechnik unter Verwendung von Ergebnissen einer geologischen Oberflächenkartierung und zumindest eines Teils des technischen und analytischen Erkundungspotentials, in Abhängigkeit von einem ersten Grad der Wahrscheinlichkeit für die Genauigkeit der objektiven Lagerstättenverhältnisse und von der Reichweite und Eindringtiefe der Erkundungsmethoden ermittelt. Für eine folgende Stufe der Erkundung wird ein Erkundungsraster für die Erkundungsmaßnahmen berechnet, wobei zweite Abstände für den Einsatz der Erkundungstechnik in Abhängigkeit von einem zweiten Grad der Wahrscheinlichkeit für die Genauigkeit der Abbildung der objektiven Lagerstättenverhältnisse der folgenden Stufe und von Ergebnissen eines zufallsabhängigen Stichprobenumfangs und einer Korrelation einer vorhergehenden Stufe der Erkundung bestimmt werden.

Die Aufgabe der vorliegenden Erfindung besteht darin, diese Lösungen weiterzuentwickeln.

Diese Aufgabe wird erfindungsgemäß durch die Merkmale in den Ansprüchen 1 und 3 gelöst. Zweckmäßige Ausgestaltungen der Erfindung sind in den Unteransprüchen enthalten.

Ein besonderer Vorteil der vorliegenden Erfindung besteht darin, dass durch die Berechnung eines Erkundungsrasters die Effizienz bei der Lagerstättenerkundung erhöht wird. Dies wird dadurch erreicht, dass in einem ersten Schritt eine Voruntersuchung zu der vermuteten Lagerstätte mit Erstellung eines geologisch-mineralogischen und/oder geophysikalischen Anfangsbefundes durchgeführt wird (Lagerstättenhypothese). Hierfür kommen herkömmliche Vorgehensweisen zur Anwendung, wie beispielsweise eine Oberflächenkartierung mit geophysikalischen Feldtests in kalibrierten geophysikalischen Modellen. Als Erkundungsmethoden kommen vorzugsweise Geophysik, Bohrungen, Schürfe und/oder Analytik zum Einsatz. Erfindungsgemäß umfasst die Vorerkundung Probenentnahmen von geologischem Untergrund, beispielsweise durch Bohrungen und/oder Schürfe, und die Ermittlung der Korrelation $r_0$ zwischen dem Erzgehalt und den Begleitmineralien der gezogenen Proben. Die Korrelation $r_0$ wird für die Berechnung der Abstände $d_1$ für den Einsatz der Erkundungsmethoden in der nachfolgenden Stufe der Erkundung genutzt. Erkundungsmethoden umfassen beispielsweise zumindest Bohrungen und/oder Schürfe. Proben werden synonym auch als Stichproben bezeichnet.

Der geologisch-mineralogische Anfangsbefund zeigt auf, ob und unter welcher Fläche bauwürdige Rohstoffe vermutet werden. Als Kriterium für bauwürdige Rohstoffe können beispielsweise eine erhöhte CLARKE-Zahl, d.i. der mittlere Massenanteil eines chemischen Elementes an der Zusammensetzung der Lithosphäre, und ein vorgebbarer Wert für die Korrelation $r_0$ zwischen dem Erzgehalt und den Begleitmineralien dienen. Die Fläche über einer erhöhten Rohstoffkonzentration wird als Erkundungsfläche $G_1$ bezeichnet. Aus der Erkundungsfläche $G_1$ wird mit Hilfe der vorläufig ermittelten Grenzteufe $G_T$ das Raumvolumen $V_1 = G_1 \cdot G_T$ für die nachfolgende Stufe des erfindungsgemäßen Verfahrens bestimmt. Das Raumvolumen bezeichnet den in der nachfolgenden Stufe zu untersuchenden Raumkörper.

Die nächste Stufe des erfindungsgemäßen Verfahrens umfasst die erwähnte Berechnung der Abstände $d_1$ für den Einsatz der Erkundungsmethoden. Hierfür wird die Korrelation $r_0$ zwischen dem Erzgehalt und den Begleitmineralien wie z.B. Gold, Quarz, Hämatit, Rutil, das Raumvolumen $V_1$, eine vorgebbare Wahrscheinlichkeit $P_{01}(t)$ für die Aussagesicherheit der Erkundungsergebnisse in dieser Stufe, die technische Reichweite a der eingesetzten technischen Erkundungsmethoden, eine vorgebbare statistische Sicherheit $\lambda_1$ für die in dieser Stufe gezogenen Stichproben, der vorgesehene Aufwand $t_1$ und die Suchintensität $n_1(t_1)$, d.h. die Anzahl von Stichproben $n_1$ je Aufwandseinheit, ausge-

wertet. In einem nicht-erfindungsgemäßen Beispiel wird zunächst das Volumen $V_{01}$ von Erkundungszonen berechnet gemäß der Formel

$$V_{01} = V_1 \left( 1 - \left( 1 - P_{01}(t) \right) e^{\int_0^{t_1} \frac{2ar_0 n_1(t)}{V_1(2-r_0)} dt} \right). \quad (1)$$

Mit Hilfe der Grenzteufe $G_T$ ermittelt man aus dem Volumen $V_{01}$ der Erkundungszonen eine Erkundungsfläche $G_{01}$ gemäß $G_{01} = V_{01} / G_T$, und aus der Erkundungsfläche $G_{01}$ die gesuchten Abstände $d_1$ für den Einsatz der Erkundungsmethoden gemäß $d_1 = \sqrt{G_{01}}$.

Diese Abstände $d_1$ stellen das sogenannte Erkundungsraster dar, d.h. die Abstände zwischen den Punkten, an denen Erkundungsmethoden zur Probenentnahme durchgeführt werden. An den Punkten des Erkundungsrasters wird nun die Anzahl $n_1$ an Proben gezogen.

Um das Erkundungsraster, d.h. die Abstände $d_2$ für den Einsatz der Erkundungsmethoden, für die nachfolgende Stufe der Erkundung zu bestimmen, werden die Stichproben ausgewertet, insbesondere analysiert, vorzugsweise indem die Korrelation $r_1$ zwischen dem Erzgehalt und den Begleitmineralien ermittelt wird.

Die Korrelation $r_1$, die den Zusammenhang zwischen dem Erzgehalt und den Begleitmineralien der in der aktuellen Stufe der Erkundung gezogenen Proben beschreibt, dient als Ausgangspunkt für die Berechnung der Abstände $d_2$ für den Einsatz der Erkundungsmethoden. Weiter wird eine statistische Sicherheit $\lambda_2$ für die Stichproben der nachfolgenden Erkundungsstufe und ein Aufwand $t_2$, mit dem die nachfolgende Erkundungsstufe durchgeführt werden soll, vorgegeben. Aus der statistischen Sicherheit $\lambda_2$ wird die Anzahl $n_2$ ermittelt, mit der die statistische Sicherheit $\lambda_2$ realisiert werden kann. Erfindungsgemäß wird weiter eine Wahrscheinlichkeit $P_{02}(t)$ für die Aussagesicherheit der Erkundungsergebnisse in dieser nachfolgenden Stufe vorgegeben. Vorzugsweise wird für jede höhere Stufe i (i = 1, 2, 3, ...) eine höhere Wahrscheinlichkeit $P_{0i}(t)$ vorgegeben.

In dem nicht erfindungsgemäßen Beispiel wird mit Hilfe der Formel

$$V_{02} = V_2 \left( 1 - \left( 1 - P_{02}(t) \right) e^{\int_0^{t_2} \frac{2ar_1 n_2(t)}{V_2(2-r_1)} dt} \right) \quad (2)$$

nun das Volumen $V_{02}$ der Erkundungszonen der nachfolgenden Stufe der Erkundung berechnet. Dabei beschreiben $V_2$ das Raumvolumen der nachfolgenden Stufe und a die technische Reichweite der eingesetzten technischen Erkundungsmethoden. Das Raumvolumen $V_2$ der nachfolgenden Stufe kann prinzipiell frei vorgegeben werden. In einer ersten beispielhaften Variante ist $V_2 = V_1$. Bevorzugt wird das Raumvolumen $V_2$ optimiert und neu berechnet.

Aus dem Volumen $V_{02}$ und der Kenntnis der Grenzteufe $G_T$ werden nun, wie oben beschrieben, die Abstände $d_2$ für den Einsatz der Erkundungsmethoden bestimmt.

In dem nicht-erfindungsgemäßen Beispiel ist bevorzugt weiter vorgesehen, das Raumvolumen für die nachfolgende Stufe der Erkundung zu optimieren gemäß der Formel:

$$V_{2,opt} = \frac{V_1}{1 + \left( 1 - \tilde{P}_{01}(t) \right) \cdot e^{\int_0^{t_1} \frac{2ar_0 n_1(t)}{V_1(2-r_0)} dt}}, \quad (3)$$

wobei die Wahrscheinlichkeit $\tilde{P}_{01}(t)$ in Formel (3) frei vorgegeben werden kann.

Damit ergeben sich die optimierten Abstände $d_2$ für den Einsatz der Erkundungsmethoden wie folgt:

$$V_{02,opt} = V_{2,opt} \left( 1 - \left( 1 - P_{02}(t) \right) e^{\int_0^{t_2} \frac{2ar_1 n_2(t)}{V_2(2-r_1)} dt} \right). \quad (4)$$

Durch den Einsatz der Erkundungsmethoden werden an den Punkten des Erkundungsrasters neue Proben gezogen, die anschließend ausgewertet werden, wobei die Auswertung vorzugsweise die Ermittlung des Erzgehalts und der Korrelation $r_2$ zwischen dem Erzgehalt und den Begleitmineralien dieser Stufe der Erkundung umfasst. Diese Korrelation $r_2$ wird bei der Bestimmung des Erkundungsrasters der nächsten Stufe der Erkundung genutzt.

Allgemein lässt sich das Verfahren in dem nicht-erfindungsgemäßen Beispiel somit wie folgt beschreiben: In einer ersten Stufe des Erkundungsverfahrens wird ein Raumvolumen $V_1$ und eine Korrelation $r_0$ zwischen dem Erzgehalt und den Begleitmineralien der in der ersten Stufe gezogenen Proben bestimmt.

Für nachfolgende Stufen i (i = 1, 2, 3, ...) der Erkundung werden jeweils Volumina $V_{0i}$ von Erkundungszonen berechnet gemäß:

$$V_{0i} = V_i \left( 1 - \left( 1 - P_{0i}(t) \right) e^{\int_0^{t_i} \frac{2ar_{i-1}n_i(t)}{V_i(2-r_{i-1})}dt} \right), \qquad (5)$$

wobei

$V_i$: das Raumvolumen des in der i-ten Stufe der Erkundung zu untersuchenden Körpers,

$P_{0i}(t)$: die Aussagesicherheit für die Erkundungsergebnisse der i-ten Stufe der Erkundung,

$n_i(t_i)$: die Anzahl der Stichproben je Aufwandseinheit in der i-ten Stufe der Erkundung,

a: die technische Reichweite von eingesetzten technischen Erkundungsmethoden,

$r_{i-1}$: die Korrelation zwischen dem Erzgehalt und den Begleitmineralien der in der (i-1)-ten Stufe der Erkundung entnommenen Proben, und

$t_i$: den für die i-te Stufe der Erkundung vorgesehenen Aufwand

bezeichnen.

Aus den Volumina $V_{0i}$ werden die Abstände $d_i$ für einen Einsatz der technischen Erkundungsmethoden in der i-ten Stufe ermittelt.

Durch den Einsatz der technischen Erkundungsmethoden in der i-ten Stufe der Erkundung werden neue Proben gezogen, und zwar im Umfang von $n_i$, d.h. es wird eine Anzahl $n_i$ von Proben gezogen, die die vorgegebene statistische Sicherheit $\lambda_i$ realisieren.

Für diese Proben aus der i-ten Stufe der Erkundung wird die Korrelation $r_i$ zwischen dem Erzgehalt und den Begleitmineralien bestimmt, welche für die Berechnung der Volumina $V_{0(i+1)}$ von Erkundungszonen bzw. für die Berechnung der Abstände $d_{i+1}$ für einen Einsatz der technischen Erkundungsmethoden in der (i+1)-ten Stufe verwendet wird.

Vorzugsweise erhöht sich die Wahrscheinlichkeit $P_{0(i+1)}(t)$ für die Aussagesicherheit für die Erkundungsergebnisse der (i+1)-ten Stufe der Erkundung gegenüber der Wahrscheinlichkeit $P_{0i}(t)$ für die Aussagesicherheit für die Erkundungsergebnisse der i-ten Stufe der Erkundung.

In dem nicht-erfindungsgemäßen Beispiel ist bevorzugt weiter vorgesehen, dass eine Optimierung der Volumen $V_i$ (i = 2, 3, ...) des zu erkundenden Raumkörpers erfolgt gemäß:

$$V_{i,opt} = \frac{V_{i-1}}{1 + (1 - \tilde{P}_{0i}(t)) \cdot e^{\int_0^{t_{i-1}} \frac{2ar_{i-2}n_{i-1}(t)}{V_{i-1}(2-r_{i-2})}dt}} \qquad (6)$$

mit vorgebbarer Wahrscheinlichkeit $\tilde{P}_{0i}(t)$.

Es ist bevorzugt weiter vorgesehen, dass für jede Erkundungsmaßnahme ein spezielles Erkundungsraster bestimmt wird.

Erfindungsgemäß ist vorgesehen, dass die Berechnung der Volumina vereinfacht wird, was die Durchführung des Erkundungsverfahrens beschleunigt und zu einer weiteren Effizienzsteigerung bei der Erkundung von Rohstofflagerstätten führt.

Hierfür ist vorgesehen, das Volumen $V_{0i}$ von Erkundungszonen gemäß folgender Formel

$$V_{0i} = V_i \left( 1 - \left( 1 - P_{0i}(t) \right) e^{\frac{1}{t_i}\left(\frac{2ar_{i-1}n_i(t_i)}{V_i(2-r_{i-1})}\right)t_i} \right) \qquad (7)$$

zu berechnen, wobei

$V_i$: das Raumvolumen des in der i-ten Stufe der Erkundung zu untersuchenden Körpers,

$P_{0i}(t)$: die Aussagesicherheit für die Erkundungsergebnisse der i-ten Stufe der Erkundung,

$n_i(t_i)$: die Anzahl der Stichproben je Aufwandseinheit in der i-ten Stufe der Erkundung,

a: die technische Reichweite von eingesetzten technischen Erkundungsmethoden,

$r_{i-1}$: die Korrelation zwischen dem Erzgehalt und den Begleitmineralien der in der (i-1)-ten Stufe der Erkundung entnommenen Proben, und

$t_i$: den für die i-te Stufe der Erkundung vorgesehenen Aufwand

beschreiben.

Die Optimierung der Volumina $V_i$ der in den einzelnen Stufen i zu erkundenden Raumkörper erfolgt gemäß dieser bevorzugten Ausführungsform unter Verwendung der Formel:

$$V_i, opt = \frac{V_{i-1}}{1 + (1 - \tilde{P}_{0i}(t)) \cdot e^{\frac{1}{t_{i-1}}\left(\frac{2ar_{i-2}n_{i-1}(t_{i-1})}{V_{i-1}(2-r_{i-2})}\right)t_{i-1}}}, \qquad (8)$$

wobei die Wahrscheinlichkeit $\tilde{P}_{01}(t)$ frei wählbar ist.

Eine weitere Ausführungsform des erfindungsgemäßen Verfahrens verbessert die Effizienz der Erkundung weiter, indem für die Berechnung des Volumens $V_{0i}$ von Erkundungszonen folgende Formel verwendet wird:

$$V_{0i} = V_i \left( 1 - \left( 1 - P_{0i}(t) \right) e^{\frac{2ar_{i-1}n_i(t_i)}{V_i(2-r_{i-1})} \cdot t_{i-1}} \right), \qquad (9)$$

wobei

$V_i$: das Raumvolumen des in der i-ten Stufe der Erkundung zu untersuchenden Körpers,

$P_{0i}(t)$: die Aussagesicherheit für die Erkundungsergebnisse der i-ten Stufe der Erkundung,

$n_i(t_i)$: die Anzahl der Stichproben je Aufwandseinheit in der i-ten Stufe der Erkundung,

a: die technische Reichweite von eingesetzten technischen Erkundungsmethoden,

$r_{i-1}$: die Korrelation zwischen dem Erzgehalt und den Begleitmineralien der in der (i-1)-ten Stufe der Erkundung entnommenen Proben, und

$t_i$: den für die i-te Stufe der Erkundung vorgesehenen Aufwand

bezeichnen.

Die Optimierung der Volumina $V_i$ der in den einzelnen Stufen i zu erkundenden Raumkörper erfolgt gemäß dieser bevorzugten Ausführungsform unter Verwendung der Formel:

$$V_{i,opt} = \frac{V_{i-1}}{1 + (1 - \tilde{P}_{0i}(t)) \cdot e^{\frac{2ar_{i-2}n_{i-1}(t_{i-1})}{V_{i-1}(2-r_{i-2})} \cdot t_{i-1}}}, \qquad (10)$$

mit frei vorgebbarer Wahrscheinlichkeit $\tilde{P}_{0i}t)$.

Wie aus den Formeln (2) bis (4) ersichtlich, werden die optimierten Volumina $V_{0i}$ der Erkundungszonen be-

rechnet, indem in den Formeln (5), (7) und (9) die Volumina $V_i$ durch $V_{i,opt}$ ersetzt werden.

Gemäß einer bevorzugten Ausführungsform des erfindungsgemäßen Verfahrens wird die Wahrscheinlichkeit $\tilde{P}_{0i}(t)$ für eine nachfolgende Stufe der Erkundung gegenüber der vorangehenden Stufe gesenkt. In den früheren Stufen der Erkundung wird somit eine höhere Aussagesicherheit $\tilde{P}_{0i}(t)$ für die Erkundungsergebnisse vorgegeben, als in darauf folgenden, späteren Stufen der Erkundung.

Gemäß einer anderen bevorzugten Ausführungsform der Erfindung wird die technische Reichweite a der Erkundungsmethode geologische Ausleuchtung als Produkt aus dem halben Elektrodenabstand $\overline{AB}$, der Eindringtiefe $E_T$ und der Wobbelbreite w gemäß der Formel

$$a = \frac{\overline{AB}}{2} \cdot E_T \cdot w$$

bestimmt. Gemäß einer bevorzugten Ausführungsform der Erfindung wird für diese Berechnung eine Wobbelbreite w verwendet, die wie folgt definiert ist:

$$w = \frac{\overline{AB}}{2} \cdot \frac{1}{\lambda},$$

wobei

$\overline{AB}$ den Elektrodenabstand nach der geophysikalischen SCHLUMBERGER-Anordnung und
$\lambda$ eine vorgebbare statistische Sicherheit

beschreiben. Beispielsweise kann die statistische Sicherheit $\lambda$ für die einzelnen Stufen der Erkundung wie folgt vorgegeben werden:

geologische Studie: $\lambda = 30\%$,
Vorerkundung: $\lambda = 50\%$,
Übersichtserkundung: $\lambda = 75\%$,
Detailerkundung: $\lambda = 90\%$.

Die Erfindung umfasst somit die Aufstellung eines Suchmodells zum Aufsuchen und Bestimmen von energetischen, metallischen, chemischen und keramischen Rohstoffanreicherungen in Sedimentfolgen, bei dem im Spannungsfeld zwischen Aussagesicherheit $P_0$ für die Erkundungsergebnisse, der statistischen Sicherheit $\lambda$ der gezogenen Stichproben und dem für die Erkundung vorgesehenen Aufwand t (Kosten) die Abstände d zwischen den Bohr- bzw. Schürfpunkten zur Stichprobenentnahme berechnet werden.

Das Suchmodell geht dabei grundsätzlich von der Beziehung

$$POD = 1 - e^{-C} \qquad (11)$$

aus, in der

POD die Wahrscheinlichkeit für die Aussagesicherheit für die Erkundungsergebnisse und
C das sogenannte Erkundungspotential

beschreiben (siehe beispielsweise den Artikel "A Method for Determining Effective Sweep Width for Land Searches" der Potomac Management Group, Inc., Alexandria, VA (US) 2002).

Hieraus lässt sich die Formel

$$P_0(t) = 1 - e^{-\int_0^t \gamma(t)dt - \ln\left(1 - \frac{V_0}{V}\right)} \qquad (12)$$

ableiten, welche die Wahrscheinlichkeit für die Aussagesicherheit für die Erkundungsergebnisse beschreibt, wenn ein Erkundungspotential $\int_0^t \gamma(t)dt,$ das Erkundungsvolumen V und das Volumen $V_0$ der Erkundungszonen zugrunde gelegt werden.

Als Erkundungspotential werden erfindungsgemäß die Formeln (ii) und (iii)

$$\text{(i)} \quad \int_0^t \frac{2arn(t)}{V(2-r)} \, dt,$$

$$\text{(ii)} \quad \frac{1}{t}\left(\frac{2arn(t)}{V(2-r)}\right)^t \text{ bzw.}$$

$$\text{(iii)} \quad \frac{2arn(t)}{V(2-r)} \cdot t$$

vorgeschlagen.

Das Verfahren soll nachstehend an einem Beispiel in größerem Detail erläutert werden.

1. Identifikation eines geologisch-mineralogischen und/oder geophysikalischen Anfangsbefundes

Der erste Schritt des beispielhaften Verfahrens besteht in der Erstellung eines geologisch-mineralogischen und/oder geophysikalischen Anfangsbefundes. Hierbei kommen herkömmliche Erkundungsstrategien zum Einsatz wie beispielsweise eine Oberflächenkartierung mit geophysikalischen Feldtests in kalibrierten geophysikalischen Modellen. Insbesondere schließt die Erstellung des Anfangsbefundes die Durchführung von Probebohrungen und Probeschürfen sowie die Analyse der durch die Bohrungen und/oder Schürfe gewonnenen Proben ein.

Als Erkundungsmethoden kommen, wie erwähnt, somit Geophysik, Bohrungen, Schürfe und/oder Analytik zum Einsatz. Die Analytik umfasst dabei vorzugsweise die Ermittlung des Erzgehaltes und einer Korrelation $r_0$ zwischen dem Erzgehalt und den Begleitmineralien der gezogenen Proben.

Hieraus wird in einer beispielhaften Ausführungsform die Erkundungsfläche $G_1$ der nachfolgenden Stufe des erfindungsgemäßen Verfahrens bestimmt, etwa als Fläche mit erhöhter CLARKE-Zahl und einer vorgebbaren Korrelation $r_0$ zwischen dem Erzgehalt und den Begleitmineralien. Aus der Erkundungsfläche $G_1$ wird mit Hilfe der Grenzteufe $G_T$ das Raumvolumen $V_1 = G_1 \cdot G_T$ für die nachfolgenden Stufe des erfindungsgemäßen Verfahrens bestimmt.

2. Geologische Studie

In dem beispielhaften Verfahren wird die nachfolgende Stufe als geologische Studie durchgeführt und eine Wahrscheinlichkeit von $P_{01}(t) = 30\%$ für die Aussagesicherheit für die Erkundungsergebnisse der geologischen Studie vorgegeben. Aus

dem Erkundungsvolumen $V_1$,
der Wahrscheinlichkeit $P_{01}(t)$,
der technischen Reichweite a der eingesetzten Erkundungsmethoden (z.B. Geophysik, Bohrungen, Schürfe),
der Korrelation $r_0$ zwischen dem Erzgehalt und den Begleitmineralien der in der vorhergehenden Stufe gezogenen Proben,
einer vorgebbaren statistischen Sicherheit $\lambda_1$ und
der Anzahl $n_1 (t_1)$ von Stichproben pro Aufwandseinheit (Kosteneinheit)

werden gemäß Formel (1) bzw. (5) zunächst die Volumina $V_{01}$ der Erkundungszonen berechnet:

$$V_{01} = V_1 \left( 1 - (1 - 0{,}3)e^{\int_0^{t_1} \frac{2ar_0n_1(t)}{V_1(2-r_0)}dt} \right)$$

Dabei wird das Raumvolumen $V_1$, das Volumen $V_{01}$ der Erkundungszonen und die technische Reichweite a beispielsweise in m$^3$, der Aufwand $t_1$ beispielsweise in Kosteneinheiten wie z.B. USD, Euro, und der Wert $n_1(t)$ in Anzahl/Kosteneinheit angegeben. Die Wahrscheinlichkeit $P_{01}(t)$, die Korrelation $r_0$, die statistische Sicherheit $\lambda_1$ und die Anzahl $n_1$ der Stichproben sind dimensionslos. Die technische Reichweite bei der Erkundungsmethode Bohrung ist durch das Volumen des Bohrkerns definiert, bei der Erkundungsmethode Schurf als Volumen des Aushubs oder bei der Erkundungsmethode geophysikalischen Ausleuchtung als das Volumen, das sich als Produkt aus dem halben Elektrodenabstand, der Eindringtiefe $E_T$ und der Wobbelbreite w, auch als Sweep Width bezeichnet (vgl. bspw. den o.g. Artikel "A Method for Determining Effective Sweep Width for Land Searches" der Potomac Management Group, Inc., Alexandria, VA (US) 2002), ergibt. Die Eindringtiefe $E_T$ kann beispielsweise mit der LONDON-Gleichung bestimmt werden.

Damit ergibt sich die technische Reichweite a für die Erkundungsmethode geophysikalischen Ausleuchtung zu:

$$a = \frac{\overline{AB}}{2} \cdot E_T \cdot w \, .$$

Gemäß einer beispielhaften Ausführungsform wird die Wobbelbreite aus dem Elektrodenabstand $\overline{AB}$ und einer vorgebbaren statistischen Sicherheit $\lambda$ abgeleitet gemäß:

$$w = \frac{\overline{AB}}{2} \cdot \frac{1}{\lambda}$$

Aus der Kenntnis der Grenzteufe $G_T$ lassen sich die Flächen $G_{01} = V_{01} / G_T$ der Erkundungszonen und schließlich die Abstände $d_1$ zwischen den Bohr- bzw. Schürfpunkten zur Stichprobenentnahme ermitteln, etwa als $d_1 = \sqrt{G_{01}}$.

Somit kann durch Vorgabe der Wahrscheinlichkeit von $P_{01}(t)$ für die Aussagesicherheit für die Erkundungsergebnisse, der statistischen Sicherheit $\lambda_1$ und der vorgesehenen Kosten $t_1$ die Erkundungsdichte, d.h. der Abstand der Erkundungsmethoden, berechnet und gesteuert werden.

Darüber hinaus ergibt sich aus der vorgegebenen statistischen Sicherheit $\lambda_1$ auch die Anzahl $n_1$ der in der geologischen Studie zu ziehenden Stichproben, die anschließend ausgewertet, insbesondere analysiert, werden. Vorzugsweise umfasst die Auswertung die Berechnung der Korrelation $r_1$ zwischen dem Erzgehalt und den Begleitmineralien.

3. Vorerkundung

Die Korrelation $r_1$ geht nun in die Berechnungen für die nachfolgende Stufe ein, die in dieser beispielhaften Ausführungsform als Vorerkundung mit einer Wahrscheinlichkeit von $P_{02}(t) = 50\%$ für die Aussagesicherheit für die Erkundungsergebnisse durchgeführt wird.

Darüber hinaus erfolgt in diesem nicht-erfindungsgemäßen Beispiel eine Optimierung des Raumvolumens für die Vorerkundung gemäß

$$V_2 = \frac{V_1}{1 + (1 - 0{,}9) \cdot e^{\int_0^{t_1} \frac{2ar_0n_1(t)}{V_1(2-r_0)}dt}}$$

so dass sich für die Volumina $V_{02}$ der Erkundungszonen für die Vorerkundung ergibt:

$$V_{02} = V_2 \left( 1 - (1 - 0,5)e^{\int_0^{t_2} \frac{2ar_1 n_2(t)}{V_2(2-r_1)}dt} \right)$$

mit vorgegebenen Kosten $t_2$ und der einer vorgebbaren statistischen Sicherheit $\lambda_2$ entsprechenden Anzahl $n_2$ von Stichproben, woraus sich, wie für die geologische Studie beschrieben, die Abstände $d_2$ zwischen den Bohr- bzw. Schürfpunkten zur Stichprobenentnahme ermitteln lassen.

An den Bohr- bzw. Schürfpunkten wird die ermittelte Anzahl $n_2$ von Stichproben gezogen und ausgewertet, vorzugsweise umfasst die Auswertung die Berechnung der Korrelation $r_2$, die für die Durchführung der nachfolgenden Erkundungsstufe verwendet wird.

4. Übersichtserkundung

Die nächste Stufe der Erkundung wird als Übersichtserkundung mit einer Wahrscheinlichkeit von $P_{03}(t) = 75\%$ für die Aussagesicherheit für die Erkundungsergebnisse durchgeführt. Die Optimierung des Raumvolumens für die Übersichtserkundung erfolgt gemäß

$$V_3 = \frac{V_2}{1 + (1 - 0,75) \cdot e^{\int_0^{t_2} \frac{2ar_1 n_2(t)}{V_2(2-r_1)}dt}}$$

so dass sich für die Volumina $V_{03}$ der Erkundungszonen für die Übersichtserkundung ergibt:

$$V_{03} = V_3 \left( 1 - (1 - 0,75)e^{\int_0^{t_3} \frac{2ar_2 n_3(t)}{V_3(2-r_2)}dt} \right),$$

mit vorgegebenen Kosten $t_3$ und der einer vorgebbaren statistischen Sicherheit $\lambda_3$ entsprechenden Anzahl $n_3$ von Stichproben. Aus $V_{03}$ werden wie in den vorhergehenden Stufen der Erkundung die Abstände $d_3$ zwischen den Bohr- bzw. Schürfpunkten zur Stichprobenentnahme ermittelt.

An den Bohr- bzw. Schürfpunkten wird die ermittelte Anzahl $n_3$ von Stichproben gezogen und ausgewertet, insbesondere analysiert, wobei die Auswertung die Berechnung der Korrelation $r_3$, die für die Durchführung der nachfolgenden Erkundungsstufe verwendet wird, umfasst.

5. Detailerkundung

Die nächste Stufe der Erkundung wird als Detailerkundung mit einer Wahrscheinlichkeit von $P_{04}(t) = 90\%$ für die Aussagesicherheit für die Erkundungsergebnisse durchgeführt. Die Optimierung des Raumvolumens für die Detailerkundung erfolgt gemäß

$$V_4 = \frac{V_3}{1 + (1 - 0,5) \cdot e^{\int_0^{t_3} \frac{2ar_2 n_3(t)}{V_3(2-r_2)}dt}}$$

so dass sich für die Volumina $V_{04}$ der Erkundungszonen für die Detailerkundung ergibt:

$$V_{04} = V_4 \left( 1 - (1 - 0,90) e^{\int_0^{t_4} \frac{2 a r_3 n_4(t)}{V_4(2 - r_3)} dt} \right),$$

mit vorgegebenen Kosten $t_4$ und der einer vorgebbaren statistischen Sicherheit $\lambda_4$ entsprechenden Anzahl $n_4$ von Stichproben. Aus $V_{04}$ werden wie in den vorhergehenden Stufen der Erkundung die Abstände $d_4$ zwischen den Bohr- bzw. Schürfpunkten zur Stichprobenentnahme ermittelt, an denen die Detailerkundung durchgeführt wird.

Nach der Detailerkundung wird ein sogenannter Abschlussbericht über die geologische Erkundung erstellt, der eine wichtige Entscheidungshilfe bei der nachfolgenden Bergbauplanung darstellt.

Anhand eines weiteren Ausführungsbeispiels sollen die Arbeitsschritte detaillierter beschrieben werden.

Am Anfang des beispielhaften Verfahrens steht eine geologische und hydrologische Oberflächenkartierung mit geophysikalischen Feldtests, Probebohrungen mit anschließender Analytik. Aus den Untersuchungsergebnissen werden beispielsweise eine Lagerstättenhypothese, eine Erkundungsfläche, eine Grenzteufe, die hydrologische Situation und/oder Gebiete mit erhöhter CLARKE-Zahl abgeleitet. In Abhängigkeit von diesen abgeleiteten Größen werden das mathematische Suchmodell und die einzusetzenden Suchmethoden ausgewählt, beispielsweise etwa ein Suchmodell gemäß Formel (12) mit einem der Erkundungspotentiale (i) bis (iii).

Weiter werden aus den Untersuchungsergebnissen die Daten zur Berechnung des Suchmodells für die geologische Studie bei einer vorgebbaren statistischen Sicherheit $ë_1$, beispielsweise $\lambda_1 = 30\%$ für die geologische Studie, ausgewählt, also beispielsweise die Reichweite a der technischen Erkundungsmethoden, die Anzahl $n_1$ der Stichproben, die Korrelation $r_1$ zwischen der CLARKE-Zahl und den Medianwerten der erztragenden Gesteine und Begleitmineralien (Quarz, Rutil, Hämatit) und das vorläufige Raumvolumen des Kubus unter der Erkundungsfläche.

Die Reichweite a der technischen Erkundungsmethoden wird dabei beispielsweise für

- die Erkundungsmethode Bohrung als das Volumen des Bohrkerns mit Einfallsbetrag ss,
- die Erkundungsmethode Schurf als Volumen des Aushubs oder
- die Erkundungsmethode geophysikalischen Ausleuchtung als das Volumen, das sich als Produkt aus dem halben Elektrodenabstand, der Eindringtiefe $E_T$ und der Wobbelbreite w ergibt (wobei die Wobbelbreite w von der statistischen Sicherheit $\lambda_1$ abhängt),

definiert.

Die Anzahl der Stichproben wird beispielsweise gemäß der Formel

$$n_1 = \frac{\lambda_1{}^2 s^2}{e_s^2 + \left( \frac{\lambda_1{}^2 s^2}{N} \right)}$$

bestimmt, wobei

$\lambda_1$  die statistische Sicherheit,
s  die Standardabweichung der bei der Oberflächenkartierung gezogenen Stichproben,
$e_s$  den mittleren Fehler des Stichprobenmittels und
N  die Grundgesamtheit.

beschreiben. In der geologischen Lagerstättenerkundung ist vorgeschrieben, dass eine Stichprobe ein Volumen von 70 1, d.h. von 0,07 m$^3$, aufweisen muss. Die Grundgesamtheit N ergibt sich somit aus der Beziehung N = V / 0,07 m$^3$, wobei V Raumvolumen des zu untersuchenden Gesteinskörpers bezeichnet.

Der Korrelationskoeffizient $r_1$ wird beispielsweise mit Hilfe der Formel

$$r_1 = \frac{\sum_{i=1}^{n_0} (x_i - \bar{x})(y_i - \bar{y})}{n_0 \cdot \sigma_x \cdot \sigma_y}$$

berechnet, wobei

$x_i$      den Erzgehalt der bei der Oberflächenkartierung gezogenen Stichproben,

$\bar{x}$      den Durchschnitt (Mittelwert) des Erzgehalts,

$y_i$      den Gehalt an Begleitmineralien,

$\bar{y}$      den Durchschnitt (Mittelwert) des Gehalts an Begleitmineralien,

$\sigma_x$      die Standardabweichung des Erzgehalts,

$\sigma_y$      die Standardabweichung des Gehalts an Begleitmineralien und

$n_0$      die Anzahl der bei der Oberflächenkartierung gezogenen Stichproben

beschreiben.

Des Weiteren wird auf herkömmliche Weise aus den Untersuchungsergebnissen der geologischen und hydrologischen Oberflächenkartierung ein vorläufiges Volumen $V_1$ des Kubus unter der Erkundungsfläche bestimmt.

Gemäß dieser beispielhaften Ausführungsform wird bei der Berechnung der Volumina $V_{01}$ der Erkundungszonen der geologischen Studie eine Optimierung des vorläufigen Volumens $V_1$ gemäß den Formeln (6), (8) bzw. (10) (mit i = 1) vorgenommen.

Damit lässt sich nun nach Vorgabe einer Wahrscheinlichkeit $P_{01}(t)$ für die Aussagesicherheit der Erkundungsergebnisse der geologischen Studie, von beispielsweise $P_{01}(t) = 30\%$, das Erkundungsmodell für die geologische Studie berechnen.

Insbesondere werden zunächst durch Auswertung der Formeln (5), (7) oder (9) (mit i = 1) die Volumina $V_{01}$ der Erkundungszonen und anschließend, wie oben beschrieben, die Abstände $d_1$ zwischen den Bohr- bzw. Schürfpunkten zur Stichprobenentnahme für die geologische Studie ermittelt. Die Formeln (5), (7) oder (9) werden genutzt, in Abhängigkeit davon, ob ein Erkundungspotential der technischen Erkundungsmethoden im Kubus unter der Erkundungsfläche nach Formel (i), (ii) oder (iii) zugrunde gelegt wird.

Die geologische Studie wird nun durchgeführt, indem Bohrungen, Schürfungen und/oder eine geologische Ausleuchtung in den berechneten Abständen $d_1$ vorgenommen werden. Die dabei gewonnenen Untersuchungsergebnisse gestatten es (auf herkömmliche Weise) ein vorläufiges Lagerstättenmodell mit Ausweis einer erhöhten CLARKE-Zahl aufzustellen sowie die Daten für die Berechnung des Suchmodells für die Voruntersuchung auszuwählen. Für die Voruntersuchung wird beispielhaft eine statistische Sicherheit $\lambda_2$ von 50% vorgegeben.

Die technische Reichweite a wird analog zu der geologischen Studie bestimmt, wobei die Wobbelbreite w von der statistischen Sicherheit $\lambda_2$ abhängt.

Damit lässt sich die Anzahl der Stichproben beispielsweise gemäß der Formel

$$n_2 = \frac{\lambda_2^2 s^2}{e_s^2 + \left(\dfrac{\lambda_2^2 s^2}{N}\right)}$$

bestimmen, wobei

$\lambda_2$      die statistische Sicherheit,

$s$      die Standardabweichung der bei der geologischen Studie gezogenen Stichproben,

$e_s$      den mittleren Fehler des Stichprobenmittels und

$N$      die Grundgesamtheit

beschreiben.

Der Korrelationskoeffizient $r_2$ wird beispielsweise mit Hilfe der Formel

$$r_2 = \frac{\sum_{i=1}^{n_1}(x_i - \bar{x})(y_i - \bar{y})}{n_1 \cdot \sigma_x \cdot \sigma_y}$$

berechnet, wobei

$X_i$     den Erzgehalt der bei der geologischen Studie gezogenen Stichproben,

$\bar{x}$     den Durchschnitt (Mittelwert) des Erzgehalts,

$y_i$     den Gehalt an Begleitmineralien,

$\bar{y}$     den Durchschnitt (Mittelwert) des Gehalts an Begleitmineralien,

$\sigma_x$     die Standardabweichung des Erzgehalts,

$\sigma_y$     die Standardabweichung des Gehalts an Begleitmineralien und

$n_1$     die Anzahl der bei der geologischen Studie gezogenen Stichproben

beschreiben.

Des Weiteren wird auf herkömmliche Weise aus den Untersuchungsergebnissen der geologischen Studie ein optimales Volumen $V_2$ des Kubus unter der Erkundungsfläche bestimmt.

Gemäß dieser beispielhaften Ausführungsform wird auch bei der Berechnung der Volumina $V_{02}$ der Erkundungszonen der Vorerkundung eine Optimierung des optimalen Volumens $V_2$ gemäß den Formeln (6), (8) bzw. (10) (mit i = 2) vorgenommen.

Eine beispielhafte Vorgabe für die Wahrscheinlichkeit $P_{02}(t)$ für die Aussagesicherheit der Erkundungsergebnisse der Vorerkundung ist $P_{02}(t)$ = 50%.

Des Weiteren wird ein Suchmodell ausgewählt und berechnet, indem eine der Formeln (i) bis (iii) als Erkundungspotential zugrunde gelegt wird. Aus den entsprechenden Formeln (5), (7) bzw. (9) (mit i = 2) werden die Volumina $V_{02}$ der Erkundungszonen und anschließend, wie oben beschrieben, die Abstände $d_2$ zwischen den Bohr- bzw. Schürfpunkten zur Stichprobenentnahme für die Vorerkundung ermittelt.

Die geologische Vorerkundung wird nun durchgeführt und liefert Erkundungsergebnisse mit einer Aussagesicherheit $P_{02}(t)$ von 50%. Hieraus werden gemäß einer beispielshaften Ausführungsform Isocon- und Isopachkarten vorzugsweise mit einem Maßstab von 1:10000 erstellt.

Die dabei gewonnenen Untersuchungsergebnisse gestatten es (auf herkömmliche Weise) ein vorläufiges Lagerstättenmodell mit Größe, Form und Lage sowie Inhalt mit horizontaler und vertikaler Erzverteilung aufzustellen sowie die Daten für die Berechnung des Suchmodells für die Übersichtserkundung auszuwählen. Für die Übersichtserkundung wird beispielhaft eine statistische Sicherheit $\lambda_3$ von 75% vorgegeben.

Die technische Reichweite a wird analog zu der geologischen Studie bzw. Vorerkundung bestimmt, wobei die Wobbelbreite w von der statistischen Sicherheit $\lambda_3$ abhängt.

Die Anzahl der Stichproben lässt sich beispielsweise gemäß der Formel

$$n_3 = \frac{\lambda_3{}^2 s^2}{e_s^2 + \left(\dfrac{\lambda_3{}^2 s^2}{N}\right)}$$

bestimmen, wobei

$\lambda_3$     die statistische Sicherheit,

s     die Standardabweichung der bei der Vorerkundung gezogenen Stichproben,

$e_s$     den mittleren Fehler des Stichprobenmittels und

N     die Grundgesamtheit

beschreiben.

Der Korrelationskoeffizient $r_3$ wird beispielsweise mit Hilfe der Formel

$$r_3 = \frac{\sum_{i=1}^{n_2}(x_i - \bar{x})(y_i - \bar{y})}{n_2 \cdot \sigma_x \cdot \sigma_y}$$

berechnet, wobei

$x_i$     den Erzgehalt der bei der Vorerkundung gezogenen Stichproben,

$\bar{x}$      den Durchschnitt (Mittelwert) des Erzgehalts,

$y_i$      den Gehalt an Begleitmineralien,

$\bar{y}$      den Durchschnitt (Mittelwert) des Gehalts an Begleitmineralien,

$\sigma_x$      die Standardabweichung des Erzgehalts,

$\sigma_y$      die Standardabweichung des Gehalts an Begleitmineralien und

$n_2$      die Anzahl der bei der Vorerkundung gezogenen Stichproben

beschreiben.

Des Weiteren wird auf herkömmliche Weise aus den Untersuchungsergebnissen der Vorerkundung ein optimales Volumen $V_3$ des Kubus unter der Erkundungsfläche bestimmt.

Gemäß dieser beispielhaften Ausführungsform wird auch bei der Berechnung der Volumina $V_{03}$ der Erkundungszonen der Vorerkundung eine Optimierung des optimalen Volumens $V_3$ gemäß den Formeln (6), (8) bzw. (10) (mit i = 3) vorgenommen.

Eine beispielhafte Vorgabe für die Wahrscheinlichkeit $P_{03}(t)$ für die Aussagesicherheit der Erkundungsergebnisse der Vorerkundung ist $P_{03}(t)$ = 75%.

Des Weiteren wird ein Suchmodell ausgewählt und berechnet, indem eine der Formeln (i) bis (iii) als Erkundungspotential zugrunde gelegt wird. Aus den entsprechenden Formeln (5), (7) bzw. (9) (mit i = 3) werden die Volumina $V_{03}$ der Erkundungszonen und anschließend, wie oben beschrieben, die Abstände $d_3$ zwischen den Bohr- bzw. Schürfpunkten zur Stichprobenentnahme für die Übersichtserkundung ermittelt.

Die geologische Übersichtserkundung wird nun durchgeführt und liefert Erkundungsergebnisse mit einer Aussagesicherheit $P_{03}(t)$ von 75%. Hieraus werden gemäß einer beispielshaften Ausführungsform Isocon- und Isopachkarten vorzugsweise mit einem Maßstab von 1:5000 erstellt.

Die dabei gewonnenen Untersuchungsergebnisse gestatten es (auf herkömmliche Weise) ein vorläufiges Lagerstättenmodell mit Größe, Form und Lage sowie Inhalt mit vorbauwürdigen Reserven aufzustellen sowie die Daten für die Berechnung des Suchmodells für die Detailerkundung auszuwählen. Für die Detailerkundung wird beispielhaft eine statistische Sicherheit $\lambda_4$ von 90% vorgegeben.

Die technische Reichweite a wird analog zu der geologischen Studie, Vor- bzw. Übersichtserkundung bestimmt, wobei die Wobbelbreite w von der statistischen Sicherheit $\lambda_4$ abhängt.

Die Anzahl der Stichproben lässt sich beispielsweise gemäß der Formel

$$n_4 = \frac{\lambda_4{}^2 s^2}{e_s^2 + \left(\dfrac{\lambda_4{}^2 s^2}{N}\right)}$$

bestimmen, wobei

$\lambda_4$      die statistische Sicherheit,

s      die Standardabweichung der bei der Übersichtserkundung gezogenen Stichproben,

$e_s$      den mittleren Fehler des Stichprobenmittels und

N      die Grundgesamtheit

beschreiben.

Der Korrelationskoeffizient $r_4$ wird beispielsweise mit Hilfe der Formel

$$r_4 = \frac{\sum_{i=1}^{n_3}(x_i - \bar{x})(y_i - \bar{y})}{n_3 \cdot \sigma_x \cdot \sigma_y}$$

berechnet, wobei

$X_i$      den Erzgehalt der bei der Übersichtserkundung gezogenen Stichproben,

$\bar{x}$      den Durchschnitt (Mittelwert) des Erzgehalts,

$\underline{y}_i$   den Gehalt an Begleitmineralien,

$\overline{y}$   den Durchschnitt (Mittelwert) des Gehalts an Begleitmineralien,

$\sigma_x$   die Standardabweichung des Erzgehalts,

$\sigma_y$   die Standardabweichung des Gehalts an Begleitmineralien und

$n_3$   die Anzahl der bei der Übersichtserkundung gezogenen Stichproben

beschreiben.

Des Weiteren wird auf herkömmliche Weise aus den Untersuchungsergebnissen der Übersichtserkundung ein optimales Volumen $V_4$ des Kubus unter der Erkundungsfläche bestimmt.

Gemäß dieser beispielhaften Ausführungsform wird auch bei der Berechnung der Volumina $V_{04}$ der Erkundungszonen der Vorerkundung eine Optimierung des optimalen Volumens $V_3$ gemäß den Formeln (6), (8) bzw. (10) (mit i = 4) vorgenommen.

Eine beispielhafte Vorgabe für die Wahrscheinlichkeit $P_{04}(t)$ für die Aussagesicherheit der Erkundungsergebnisse der Vorerkundung ist $P_{04}(t)$ = 90%.

Des Weiteren wird ein Suchmodell ausgewählt und berechnet, indem eine der Formeln (i) bis (iii) als Erkundungspotential zugrunde gelegt wird. Aus den entsprechenden Formeln (5), (7) bzw. (9) (mit i = 4) werden die Volumina $V_{04}$ der Erkundungszonen und anschließend, wie oben beschrieben, die Abstände $d_4$ zwischen den Bohr- bzw. Schürfpunkten zur Stichprobenentnahme für die Detailerkundung ermittelt.

Die geologische Detailerkundung wird nun durchgeführt und liefert Erkundungsergebnisse mit einer Aussagesicherheit $P_{04}(t)$ von 90%. Hieraus werden gemäß einer beispielshaften Ausführungsform Isocon- und Isopachkarten vorzugsweise mit einem Maßstab von 1:1000 erstellt.

Die dabei gewonnenen Untersuchungsergebnisse gestatten es (auf herkömmliche Weise) die bauwürdigen Reserven zu ermitteln sowie die Daten für eine Feasibility-Studie bereitzustellen. Damit ist die geologische Erkundung abgeschlossen.

Hieran können sich nun beispielsweise eine Bergbauplanung (Maßstab 1:30), ein Rahmenbetriebsplan mit Umweltverträglichkeitsprüfung anschließen - gefolgt von einer Investitionsentscheidung.

Nicht beansprucht werden im Rahmen dieser Erfindung die nachfolgenden Verfahrensschritte und Verfahrensmerkmale:

1. Verfahren zur Erkundung von Rohstofflagerstätten mit einem mehrstufigen Erkundungsprozess umfassend eine erste Stufe der Erkundung mit Erstellung eines geologisch-mineralogischen und/oder geophysikalischen Anfangsbefundes, wobei die erste Stufe eine Entnahme von Proben und eine Ermittlung der Korrelation $r_0$ zwischen dem Erzgehalt und den Begleitmineralien der entnommenen Proben sowie eines Volumens $V_1$ eines zu erkundenden Raumkörpers umfasst, und wobei

für nachfolgende Stufen i (i = 1, 2, ...) der Erkundung zunächst ein Volumen $V_{0i}$ von Erkundungszonen gemäß folgender Formel

$$V_{0i} = V_i \left( 1 - \left( 1 - P_{0i}(t) \right) e^{\int_0^{t_i} \frac{2ar_{i-1}n_i(t)}{V_i(2-r_{i-1})} dt} \right)$$

ermittelt wird, wobei

$V_i$: das Raumvolumen des in der i-ten Stufe der Erkundung zu untersuchenden Raumkörpers,

$P_{0i}(t)$: die Aussagesicherheit für die Erkundungsergebnisse der i-ten Stufe der Erkundung,

$n_i(t)$: die Anzahl der Stichproben je Aufwandseinheit in der i-ten Stufe der Erkundung,

a: die technische Reichweite von eingesetzten technischen Erkundungsmethoden,

$r_{i-1}$: die Korrelation zwischen dem Erzgehalt und den Begleitmineralien der in der (i-1)-ten Stufe der Erkundung entnommenen Proben, und

$t_i$: den für die i-te Stufe der Erkundung vorgesehenen Aufwand bezeichnen, und aus dem Volumen $V_{0i}$ der Erkundungszonen Abstände $d_i$ für einen Einsatz der technischen Erkundungsmethoden ermittelt werden, und wobei durch den Einsatz der technischen Erkundungsmethoden Proben gezogen werden und für diese Proben eine Korrelation $r_i$ zwischen dem Erzgehalt und den Begleitmineralien bestimmt wird.

2. Verfahren nach Punkt 1, wobei für die zweite und darauffolgende Stufen der Erkundung eine Optimierung des Erkundungsprozesses nach dem Raumvolumen erfolgt derart, dass für die Stufe i (i = 2, 3, ...) das Raumvolumen

$V_i$ wie folgt ermittelt wird:

$$V_i = \frac{V_{i-1}}{1 + \left(1 - \tilde{P}_{0i}(t)\right) \cdot e^{\int_0^{t_{i-1}} \frac{2ar_{i-2}n_{i-1}(t)}{V_{i-1}(2-r_{i-2})}dt}}$$

mit vorgebbarer Wahrscheinlichkeit $\tilde{P}_{0i}(t)$.

Die Erfindung beschränkt sich in ihrer Ausführungsform nicht auf das vorstehend angegebene bevorzugte Ausführungsbeispiel. Der Schutzumfang der vorliegenden Erfindung ist durch die nachfolgenden Ansprüche definiert.

**Patentansprüche**

1. Verfahren zur Erkundung von Rohstofflagerstätten mit einem mehrstufigen Erkundungsprozess umfassend eine erste Stufe der Erkundung mit Erstellung eines geologisch-mineralogischen und/oder geophysikalischen Anfangsbefundes, wobei die erste Stufe eine Entnahme von Proben und eine Ermittlung der Korrelation $r_0$ zwischen dem Erzgehalt und den Begleitmineralien der entnommenen Proben sowie eines Volumens $V_1$ eines zu erkundenden Raumkörpers umfasst, und wobei
für nachfolgende Stufen i, i = 1, 2, ..., der Erkundung zunächst ein Volumen $V_{0i}$ von Erkundungszonen gemäß folgender Formel

$$V_{0i} = V_i \left(1 - \left(1 - P_{0i}(t)\right) e^{\frac{1}{t_i}\left(\frac{2ar_{i-1}n_i(t_i)}{V_i\left(2-r_{i-1}\right)}\right)^{t_i}}\right)$$

ermittelt wird, wobei

   $V_i$: das Raumvolumen des in der i-ten Stufe der Erkundung zu untersuchenden Raumkörpers,
   $P_{0i}(t)$: die Aussagesicherheit für die Erkundungsergebnisse der i-ten Stufe der Erkundung,
   $n_i(t)$: die Anzahl der Stichproben je Aufwandseinheit in der i-ten Stufe der Erkundung,
   a: die technische Reichweite von eingesetzten technischen Erkundungsmethoden,
   $r_{i-1}$: die Korrelation zwischen dem Erzgehalt und den Begleitmineralien der in der (i-1)-ten Stufe der Erkundung entnommenen Proben, und
   $t_i$: den für die i-te Stufe der Erkundung vorgesehenen Aufwand bezeichnen, und aus dem Volumen $V_{0i}$ der Erkundungszonen Abstände $d_i$ für einen Einsatz der technischen Erkundungsmethoden ermittelt werden, und wobei durch den Einsatz der technischen Erkundungsmethoden mit den ermittelten Abständen $d_i$ Proben gezogen werden und für diese Proben eine Korrelation $r_i$ zwischen dem Erzgehalt und den Begleitmineralien bestimmt wird.

2. Verfahren nach Anspruch 1, wobei für die zweite und darauffolgende Stufen der Erkundung eine Optimierung des Erkundungsprozesses nach dem Raumvolumen erfolgt derart, dass für die Stufe i, i = 2, 3, ... , das Raumvolumen $V_i$ wie folgt ermittelt wird:

$$V_i = \frac{V_{i-1}}{1 + \left(1 - \tilde{P}_{0i}(t)\right) \cdot e^{\frac{1}{t_{i-1}}\left(\frac{2ar_{i-2}n_{i-1}(t_{i-1})}{V_{i-1}\left(2-r_{i-2}\right)}\right)^{t_{i-1}}}}$$

mit vorgebbarer Wahrscheinlichkeit $\tilde{P}_{0i}(t)$.

**3.** Verfahren zur Erkundung von Rohstofflagerstätten mit einem mehrstufigen Erkundungsprozess umfassend eine erste Stufe der Erkundung mit Erstellung eines geologisch-mineralogischen und/oder geophysikalischen Anfangsbefundes, wobei die erste Stufe eine Entnahme von Proben und eine Ermittlung der Korrelation $r_0$ zwischen dem Erzgehalt und den Begleitmineralien der entnommenen Proben sowie eines Volumens $V_1$ eines zu erkundenden Raumkörpers umfasst, und wobei

für nachfolgende Stufen i, i = 1, 2, ... , der Erkundung zunächst ein Volumen $V_{0i}$ von Erkundungszonen gemäß folgender Formel

$$V_{0i} = V_i \left( 1 - \left( 1 - P_{0i}(t) \right) e^{\frac{2ar_{i-1}n_i(t_i)}{V_i\left(2-r_{i-1}\right)}\cdot t_{i-1}} \right)$$

ermittelt wird, wobei

$V_i$: das Raumvolumen des in der i-ten Stufe der Erkundung zu untersuchenden Raumkörpers,

$P_{0i}(t)$: die Aussagesicherheit für die Erkundungsergebnisse der i-ten Stufe der Erkundung,

$n_i(t)$: die Anzahl der Stichproben je Aufwandseinheit in der i-ten Stufe der Erkundung,

a: die technische Reichweite von eingesetzten technischen Erkundungsmethoden,

$r_{i-1}$: die Korrelation zwischen dem Erzgehalt und den Begleitmineralien der in der (i-1)-ten Stufe der Erkundung entnommenen Proben, und

$t_i$: den für die i-te Stufe der Erkundung vorgesehenen Aufwand bezeichnen, und aus dem Volumen $V_{0i}$ der Erkundungszonen Abstände $d_i$ für einen Einsatz der technischen Erkundungsmethoden ermittelt werden, und wobei durch den Einsatz der technischen Erkundungsmethoden mit den ermittelten Abständen Proben gezogen werden und für diese Proben eine Korrelation $r_i$ zwischen dem Erzgehalt und den Begleitmineralien bestimmt wird.

**4.** Verfahren nach Anspruch 3, wobei für die zweite und darauffolgende Stufen der Erkundung eine Optimierung des Erkundungsprozesses nach dem Raumvolumen erfolgt derart, dass für die Stufe i, i = 2, 3, ..., das Raumvolumen $V_i$ wie folgt ermittelt wird:

$$V_i = \frac{V_{i-1}}{1 + \left( 1 - \tilde{P}_{0i}(t) \right) \cdot e^{\frac{2ar_{i-2}n_{i-1}(t_{i-1})}{V_{i-1}\left(2-r_{i-2}\right)}\cdot t_{i-1}}}$$

mit vorgebbarer Wahrscheinlichkeit $\tilde{P}_{0i}(t)$.

**5.** Verfahren nach einem der Ansprüche 1 bis 4, wobei die Wahrscheinlichkeit $P_{0(i+1)}(t)$ größer als die Wahrscheinlichkeit $P_{0i}(t)$ ist, i = 1, 2, 3, .....

**6.** Verfahren nach einem der Ansprüche 1 bis 5, wobei

- eine erste Erkundungsstufe als geologische Studie mit einer Wahrscheinlichkeit von $P_{01}(t)$ = 30%,
- eine zweite Erkundungsstufe als Vorerkundung mit einer Wahrscheinlichkeit von $P_{02}(t)$ = 50%,
- eine dritte Erkundungsstufe als Übersichtserkundung mit einer Wahrscheinlichkeit von $P_{03}(t)$ = 75%, und
- eine vierte Erkundungsstufe als Detailerkundung mit einer Wahrscheinlichkeit von $P_{04}(t)$ = 90%

durchgeführt werden.

**7.** Verfahren nach einem der Ansprüche 2 oder 4, wobei die Wahrscheinlichkeiten $\tilde{P}_{02}(t)$ = 90%, $\tilde{P}_{03}(t)$ = 75% und/oder $\tilde{P}_{04}(t)$ = 50%, vorgegeben werden.

8. Verfahren nach einem der Ansprüche 1 bis 7, wobei die technische Reichweite a für eine geophysikalische Ausleuchtung als Produkt aus dem halben Elektrodenabstand, der Eindringtiefe $E_T$ und der Wobbelbreite w definiert ist und die Wobbelbreite w gemäß

$$w = \frac{\overline{AB}}{2} \cdot \frac{1}{\lambda}$$

bestimmt wird, wobei

$\overline{AB}$ einen Elektrodenabstand und
$\lambda$ eine vorgebbare statistische Sicherheit

beschreiben.


**Claims**

1. A method for exploring raw material deposits with a multistep exploration process, comprising
a first exploration step including producing geologically mineralogical and/or geophysical initial findings, wherein the first step comprises sampling and determination of the correlation $r_0$ between the ore content and the accompanying minerals of the samples taken and a volume $V_1$ of a spatial body to be explored, and wherein for subsequent steps i, i = 1, 2, ... of the exploration, a volume $V_{0i}$ of exploration zones is first determined according to the following formula:

$$V_{0i} = V_i \left( 1 - \left( 1 - P_{0i}(t) \right) e^{\frac{1}{t_i} \left( \frac{2 a r_{i-1} n_i(t_i)}{V_i(2 - r_{i-1})} \right)^{t_i}} \right),$$

in which:

$V_i$: is the spatial volume of the spatial body to be explored in the i-th step of the exploration,
$P_{0i}(t)$: is the prediction reliability of the exploration results of the i-th step of the exploration,
$n_i(t)$: is the number of samples per unit of effort in the i-th step of the exploration,
a: is the technical range of used technical exploration methods,
$r_{i-1}$: is the correlation between the ore content and the accompanying minerals of the samples taken in the (i-1)-th step of the exploration, and
$t_i$: is the effort planned for the i-th step of the exploration,

and wherein distances $d_i$ for a deployment of the technical exploration methods are determined on the basis of the volume $V_{0i}$ of the exploration zones, and wherein samples are obtained thanks to the deployment of the technical exploration methods at the determined distances $d_i$, and a correlation $r_i$ between the ore content and the accompanying minerals is established for said samples.

2. The method according to Claim 1, wherein for the second and following steps of the exploration, the exploration process is optimized in accordance with the spatial volume in such a way that the spatial volume $V_i$ is determined for the step i, i = 2, 3, ... as follows:

$$V_i = \frac{V_{i-1}}{1 + \left(1 - P_{oi}(t)\right) \cdot e^{\frac{1}{t_{i-1}}\left(\frac{2ar_{i-2}\, n_{i-1}(t_{i-1})}{V_{i-1}\left(2 - r_{i-2}\right)}\right)^{t_{i-1}}}}$$

with a predefinable probability $\tilde{P}_{0i}(t)$.

3. A method for exploring raw material deposits with a multistep exploration process, comprising a first exploration step including producing geologically mineralogical and/or geophysical initial findings, wherein the first step comprises sampling and determination of the correlation $r_0$ between the ore content and the accompanying minerals of the samples taken and a volume $V_1$ of a spatial body to be explored, and wherein for subsequent steps i, i = 1, 2, ... of the exploration, a volume $V_{01}$ of exploration zones is first determined according to the following formula:

$$V_{oi} = V_i \left(1 - \left(1 - P_{oi}(t)\right)e^{\frac{2ar_{i-1}\, n_i(t_i)}{V_i\left(2 - r_{i-1}\right)} t_{i-1}}\right),$$

in which:

$V_i$: is the spatial volume of the spatial body to be explored in the i-th step of the exploration,
$P_{0i}(t)$: is the prediction reliability of the exploration results of the i-th step of the exploration,
$n_i(t)$: is the number of samples per unit of effort in the i-th step of the exploration,
a: is the technical range of used technical exploration methods,
$r_{i-1}$: is the correlation between the ore content and the accompanying minerals of the samples taken in the (i-1)-th step of the exploration, and
$t_i$: is the effort planned for the i-th step of the exploration,

and wherein distances $d_i$ for a deployment of the technical exploration methods are determined on the basis of the volume $V_{0i}$ of the exploration zones, and wherein samples are obtained thanks to the deployment of the technical exploration methods at the determined distances $d_i$, and a correlation $r_i$ between the ore content and the accompanying minerals is established for said samples.

4. The method according to Claim 3, wherein for the second and following steps of the exploration, the exploration process is optimized in accordance with the spatial volume in such a way that the spatial volume $V_i$ is determined for the step i, i = 2, 3, ... as follows:

$$V_i = \frac{V_{i-1}}{1 + \left(1 - P_{oi}(t)\right) \cdot e^{\frac{2ar_{i-2}\, n_{i-1}(t_{i-1})}{V_{i-1}\left(2 - r_{i-2}\right)} t_{i-1}}}$$

with a predefinable probability $\tilde{P}_{0i}(t)$.

5. The method according to any one of Claims 1 to 4, wherein the probability $P_{0(i+1)}(t)$ is greater than the probability $P_{01}(t)$, i = 1, 2, 3, ....

6. The method according to any one of Claims 1 to 5, wherein

   - a first exploration step is performed as a geological study with a probability of $P_{01}(t) = 30\%$,
   - a second exploration step is performed as a preliminary exploration with a probability of $P_{02}(t) = 50\%$,
   - a third exploration step is performed as a general exploration with a probability of $P_{03}(t) = 75\%$, and
   - a fourth exploration step is performed as a detailed exploration with a probability of $P_{04}(t) = 90\%$.

7. The method according to any one of Claims 2 or 4, wherein the probabilities $\tilde{P}_{02}(t) = 90\%$, $\tilde{P}_{03}(t) = 75\%$ and/or $\tilde{P}_{04}(t) = 50\%$ are predefined.

8. The method according to any one of Claims 1 to 7, wherein the technical range a for a geophysical illumination is defined as the product of half the electrode spacing, the penetration depth $E_T$ and the sweep width w, and the sweep width w is determined according to

$$w = \frac{\overline{AB}}{2} \cdot \frac{1}{\lambda},$$

wherein

$\overline{AB}$ describes an electrode spacing, and
$\lambda$ describes a predefinable statistical certainty.

## Revendications

1. Procédé de prospection de gisements de matières premières avec une procédure de prospection en plusieurs étapes, comprenant
   une première étape de prospection avec génération d'un résultat initial géologico-minéralogique et/ou géophysique, la première étape comprenant un prélèvement d'échantillons et une détermination de la corrélation $r_0$ entre la teneur en minerai et les minéraux associés des échantillons prélevés ainsi qu'un volume $V_1$ d'un corps spatial devant être prospecté, et un volume $V_{0i}$ de zones de prospection étant d'abord déterminé conformément à la formule ci-dessous pour les étapes suivantes de prospection i, i = 1, 2, ..., avec

$$V_{0i} = V_i\left(1 - \left(1 - P_{0i}(t)\right)e^{\frac{1}{t_i}\left(\frac{2ar_{i-1}n_i(t_i)}{V_i(2-r_{i-1})}\right)^{t_i}}\right)$$

   $V_i$ : le volume spatial du corps spatial devant être examiné au cours de l'i-ème étape de la prospection,
   $P_{0i}(t)$ : la sécurité de déclaration pour les résultats de prospection de l'i-ème étape de la prospection,
   $n_i(t)$ : le nombre d'échantillons par unité d'effort au cours de l'i-ème étape de la prospection,
   a : la portée technique des procédés de prospection techniques utilisés,
   $r_{i-1}$ : la corrélation entre la teneur en minerai et les minéraux associés des échantillons prélevés au cours de l'(i-1)-ième étape de la prospection, et
   $t_i$ : l'effort prévu pour l'i-ème étape de la prospection

   des distances $d_i$ pour un recours aux procédés de prospection techniques étant déterminées à partir du volume $V_{0i}$ des zones de prospection, et des échantillons étant extraits par le recours aux procédés de prospection techniques avec les distances déterminées $d_i$, et une corrélation $r_i$ entre la teneur en minerai et les minéraux associés étant déterminée pour ces échantillons.

2. Procédé selon la revendication 1, une optimisation de la procédure de prospection étant effectuée en fonction du volume spatial pour les deuxièmes étapes de prospection et suivantes de telle sorte que le volume spatial $V_i$ est déterminé comme suit, pour l'étape i, i = 2, 3, ... :

$$V_i = \frac{V_{i-1}}{1 + \left(1 - \tilde{P}_{0i}(t)\right) \cdot e^{\frac{1}{t_{i-1}}\left(\frac{2ar_{i-2}n_{i-1}(t_{i-1})}{V_{i-1}\left(2-r_{i-2}\right)}\right)^{t_{i-1}}}}$$

avec probabilité spécifiable $\tilde{P}_{0i}(t)$.

3. Procédé de prospection de gisements de matières premières avec une procédure de prospection en plusieurs étapes, comprenant
une première étape de prospection avec génération d'un résultat initial géologico-minéralogique et/ou géophysique, la première étape comprenant un prélèvement d'échantillons et une détermination de la corrélation $r_0$ entre la teneur en minerai et les minéraux associés des échantillons prélevés ainsi qu'un volume $V_1$ d'un corps spatial devant être prospecté, et un volume $V_{0i}$ de zones de prospection étant d'abord déterminé conformément à la formule ci-dessous pour les étapes suivantes i, i = 1, 2, ..., de la prospection, avec

$$V_{0i} = V_i \left(1 - \left(1 - P_{0i}(t)\right)e^{\frac{2ar_{i-1}n_i(t_i)}{V_i\left(2-r_{i-1}\right)}t_{i-1}}\right)$$

$V_i$ : le volume spatial du corps spatial devant être examiné au cours de la i-ème étape de la prospection,
$P_{0i}(t)$ : la sûreté de déclaration pour les résultats de prospection l'i-ème étape de la prospection,
$n_i(t)$ : le nombre d'échantillons par unité d'effort au cours de l'i-ème étape de la prospection,
a : la portée technique des procédés de prospection techniques utilisés,
$r_{i-1}$ : la corrélation entre la teneur en minerai et les minéraux associés des échantillons prélevés au cours de l'(i-1)-ième étape de la prospection, et
$t_i$ : l'effort prévu pour l'i-ème étape de la prospection,

des distances $d_i$ pour un recours aux procédés de prospection techniques étant déterminées à partir du volume $V_{0i}$ des zones de prospection, et des échantillons étant extraits par le recours aux procédés de prospection techniques avec les distances déterminées $d_i$, et une corrélation $r_i$ entre la teneur en minerai et les minéraux associés étant déterminée pour ces échantillons.

4. Procédé selon la revendication 3, une optimisation de la procédure de prospection étant effectuée en fonction du volume spatial pour les deuxièmes étapes de prospection et suivantes de telle sorte que le volume spatial $V_i$ est déterminé comme suit, pour l'étape i, i = 2, 3, ... :

$$V_i = \frac{V_{i-1}}{1 + \left(1 - \tilde{P}_{0i}(t)\right) \cdot e^{\frac{2ar_{i-2}n_{i-1}(t_{i-1})}{V_{i-1}\left(2-r_{i-2}\right)}t_{i-1}}}$$

avec probabilité spécifiable $\tilde{P}_{0i}(t)$.

5. Procédé selon l'une des revendications 1 à 4, la probabilité $P_{0(i+1)}(t)$ étant supérieure à la probabilité $P_{01}(t)$, i = 1,

2, 3, ....

6. Procédé selon l'une des revendications 1 à 5, les étapes suivantes étant effectuées :

   - une première étape de prospection avec une probabilité de $P_{01}(t) = 30\%$, comme étude géologique,
   - une deuxième étape de prospection avec une probabilité de $P_{02}(t) = 50\%$, comme prospection préliminaire,
   - une troisième étape de prospection avec une probabilité de $P_{03}(t) = 75\%$, comme prospection d'ensemble, et
   - une quatrième étape de prospection avec une probabilité de $P_{04}(t) = 90\%$, comme prospection détaillée.

7. Procédé selon l'une des revendications 2 ou 4, les probabilités $\tilde{P}_{02}(t) = 90\%$, $\tilde{P}_{03}(t) = 75\%$ et/ou $\tilde{P}_{04}(t) = 50\%$ étant spécifiées.

8. Procédé selon l'une des revendications 1 à 7, la portée technique a pour un éclairage géophysique étant définie comme le produit de la demi-distance entre les électrodes, la profondeur de pénétration $E_T$ et la bande de vobulation w, et la bande de vobulation w étant déterminée conformément à

$$w = \frac{\overline{AB}}{2} \cdot \frac{1}{\lambda},$$

$\overline{AB}$ décrivant une distance entre les électrodes et
$\lambda$ décrivant une sécurité statistique spécifiable.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010030453 A1
- WO 2011000755 A2